(19) Europäisches Patentamt / European Patent Office / Office européen des brevets

(11) **EP 4 101 576 A1**

(12) **EUROPEAN PATENT APPLICATION**
published in accordance with Art. 153(4) EPC

(43) Date of publication:
**14.12.2022 Bulletin 2022/50**

(21) Application number: **21750540.3**

(22) Date of filing: **28.01.2021**

(51) International Patent Classification (IPC):
**B23K 20/04** (2006.01)    **C21D 9/46** (2006.01)
**C22C 38/00** (2006.01)    **C22C 38/58** (2006.01)
**C22C 38/60** (2006.01)

(52) Cooperative Patent Classification (CPC):
**B23K 20/04; C21D 9/46; C22C 38/00; C22C 38/58; C22C 38/60**

(86) International application number:
**PCT/JP2021/003047**

(87) International publication number:
**WO 2021/157465 (12.08.2021 Gazette 2021/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.02.2020 JP 2020018750**

(71) Applicant: JFE Steel Corporation
Tokyo 100-0011 (JP)

(72) Inventors:
• IMAYAMA, Hikaru
Tokyo 100-0011 (JP)
• KURONUMA, Yota
Tokyo 100-0011 (JP)
• SAMUSAWA, Itaru
Tokyo 100-0011 (JP)
• SHIMAMURA, Junji
Tokyo 100-0011 (JP)

(74) Representative: Hoffmann Eitle
Patent- und Rechtsanwälte PartmbB
Arabellastraße 30
81925 München (DE)

(54) **DUAL-PHASE STAINLESS CLAD STEEL AND METHOD FOR MANUFACTURING SAME**

(57) Proposed is a duplex stainless clad steel and the method thereof. The duplex stainless steel comprises a base metal and a cladding material of a duplex stainless steel layer formed on at least one surface of a base steel plate as the base metal, in which the chemical composition of the cladding material comprises, by mass%, C ≤ 0.030%, Si ≤ 1.00%, Mn ≤ 2.00%, P ≤ 0.040%, S ≤ 0.0050%, Ni: 4.50 to 6.50%, Cr: 21.00 to 24.00%, Mo: 2.50 to 3.50%, N: 0.08 to 0.20%, O ≤ 0.0100%, and the remainder being Fe and inevitable impurities, where a PI value is in the range of 32.0 to 36.0 %, an X value satisfies not less than 30 in not more than 10% of the total thickness of the raw material of the cladding material, and an Xc value satisfies not more than 50 in the cladding material. The PI value, X value, and Xc value are determined as follows: $PI = Cr + 3.3\,Mo + 16\,N$; $X = 60\delta Si + 40\delta Mo$; and $Xc = 60\Delta Si + 40\Delta Mo$.

FIG. 1(a)

**(Cont. next page)**

FIG. 1(b)

3

4

A ------- A'

FIG. 1(c)

4

B

3

FIG. 1(d)

3

4

**Description**

Technical Field

This invention relates to a duplex stainless clad steel used, for example, for cargo tanks of chemical tankers, reaction vessels of chemical plants, and port structures, and to a method for manufacturing the same.

Background Art

Clad steel is formed by metallurgically bonding different kinds of metals. Unlike plating, the clad steel has no risk of peeling and can have properties that cannot be achieved with a single metal or alloy. The clad steel can perform the same functions as a solid material by selecting a cladding material that has functions suited to the purpose of each environment of use; for example, there is known high-alloy clad steel manufactured by using high-alloy steel with high corrosion resistance for the cladding material and ordinary steel for base metal and bonding these two different kinds of metal materials with different properties. Furthermore, the base metal of the clad steel can use carbon steel and low-alloy steel which are both suitable for severe environments such as high toughness and high strength other than corrosion resistance.

Thus, the clad steel uses lower amounts of alloying elements such as Cr, Ni, and Mo than a solid material. Further, the clad steel can secure not only corrosion resistance of the same level as a solid material but also strength and toughness equivalent to carbon steel and low-alloy steel, having the advantage in economic efficiency and functionality. Thus, the clad steel that uses a high-alloy cladding material is thought to be very useful functional steel material and has been demanded in various industrial fields in recent years. In addition, the recent increase in the use of clad steel for more corrosive chemical tanks and reaction vessels has increased the need for higher corrosion resistance of the clad steel.

For example, Patent Literature 1 discloses a duplex stainless clad steel with excellent pitting corrosion resistance in which the precipitation of the σ phase is suppressed by decreasing the Si content of cladding material.

Patent Literature 2 discloses another duplex stainless clad steel with excellent pitting corrosion resistance in which Ca/Al in oxide inclusions in cladding material is controlled.

Citation List

Patent Literature

Patent Literature 1: JP-A-2014-114466
Patent Literature 2: JP-A-2018-028146

Summary of Invention

Technical Problem

A high-alloy steel material for a cladding material for clad steel tends to cause segregation of contained elements in the center part of the plate thickness during casting. Therefore, in the cladding material for clad steel, precipitates containing a large number of corrosion-resistant elements such as Cr and Mo are formed at the position where segregation is caused in the center part of the plate thickness, and a depleting layer of corrosion-resistant elements is formed around the precipitates, causing deterioration in corrosion resistance. Moreover, Si concentrating in the center part tends to cause formation of intermetallic compounds that adversely affect corrosion resistance. Normally, only the surface of the cladding material for the clad steel is exposed to the corrosive environment, but the center part of the plate thickness of the cladding material may be exposed to the corrosive environment due to flaws in the clad steel during processing, mechanical damage or corrosion caused by the content, or the like. Due to the segregation, precipitates harmful to corrosion resistance may be formed in the center part of the plate thickness of the cladding material. If such center part of the plate thickness with low corrosion resistance is exposed to a corrosive environment, corrosion is rapidly developed in the center part of the plate thickness of the cladding material, significantly damaging the reliability of the structure that comprises the clad steel.

However, neither Patent Literature 1 nor Patent Literature 2 refers to guaranteeing corrosion resistance at the center position of the plate thickness of the cladding material for each clad steel, and thus they hardly stop the deterioration in corrosion resistance at the center position of the thickness in the cladding material for clad steel.

In view of the above circumstances, it is an object of the present invention to provide duplex stainless clad steel having excellent corrosion resistance up to the center part of the plate thickness of the cladding material by specifying the chemical composition of the cladding material, center segregation of the raw material of the cladding material, and concentration of the elements in the center segregation part of the cladding material of the clad steel, and a manufacturing method therefor.

Solution to Problem

A duplex stainless clad steel developed to solve the above problem and achieve the above object includes

a base metal and
a cladding material of a duplex stainless steel layer formed on at least one side of a base steel plate as the base metal, in which
the chemical composition of the cladding material comprises, by mass%, C: not more than 0.030%, Si: not more than 1.00%, Mn: not more than 2.00%, P: not more than 0.040%, S: not more than 0.0050%, Ni: 4.50 to 6.50%, Cr: 21.00 to 24.00%, Mo: 2.50 to 3.50%, N: 0.08 to 0.20%, O: not more than 0.0100%, and the remainder being Fe and inevitable impurities, where a PI value expressed by Formula (1) below is in the range of 32.0 to 36.0 %,
an X value expressed by Formula (2) below satisfies not less than 30 in not more than 10% of the total thickness of the raw material of the cladding material, and
an Xc value expressed by Formula (3) satisfies not more than 50 in the cladding material:

$$PI = Cr + 3.3\ Mo + 16\ N \ ... \ (1)$$

$$X = 60\delta Si + 40\delta Mo \ ... \ (2)$$

$$Xc = 60\Delta Si + 40\Delta Mo \ ... \ (3).$$

Note that, in above Formulae, the element symbols indicate the mass% of each element with $\delta Si$ = Si (at the analyzed position) - Si (at the 0.25t position), $\delta Mo$ = Mo (at the analyzed position) - Mo (at the 0.25t position), $\Delta Si$ = Si (at the 0.5t position) - Si (at the 0.25t position), $\Delta Mo$ = Mo (at the 0.5t position) -Mo (at the 0.25t position), and t: the plate thickness of the cladding material.

It may be a preferable solution to the problem that the chemical composition of the cladding material of the duplex stainless clad steel of the present invention further contains at least one element group, by mass%, selected from the following groups:

Group A: at least one selected from Cu: 0.01 to 1.50%, W: 0.01 to 2.00%, Co: 0.01 to 1.50%, and V: 0.01 to 0.80%;
Group B: at least one selected from Ti: 0.01 to 0.10% and Nb: 0.01 to 0.20%;
Group C: at least one selected from Sn: 0.01 to 0.20% and Sb: 0.01 to 0.20%;
Group D: at least one selected from Zr: 0.01 to 0.20%, Mg: 0.0005 to 0.0100%, Ca: 0.0005 to 0.0100%, REM: 0.01 to 0.20% and B: 0.0005 to 0.0200%, and
Group E: Al: 0.003 to 0.080%.

A method for manufacturing a duplex stainless clad steel developed to solve the above problem and to achieve the above purpose comprises

hot rolling any one of the cladding materials described above as a raw material at a rolling reduction ratio exceeding 5.0 to form a rolled body,
combining a raw material of a base metal and the rolled body of the cladding material,
heating the rolled body part of the cladding material in a temperature region of not lower than 1100°C for not less than 60 minutes, and
hot rolling the resultant at a rolling reduction ratio of not less than 3.0 to form a rolled body of clad steel, where the rolling reduction ratio is a value obtained by dividing the plate thickness before the rolling by that after the rolling.

Advantageous Effects of Invention

As explained above, the duplex stainless clad steel and the method for manufacturing thereof specify the segregation degree of Si and Mo at the center position of the plate thickness of the cladding material to thus avoid the formation of precipitates at the center position of the plate thickness of the cladding material, resulting in much higher reliability in corrosion resistance. Brief Description of Drawings

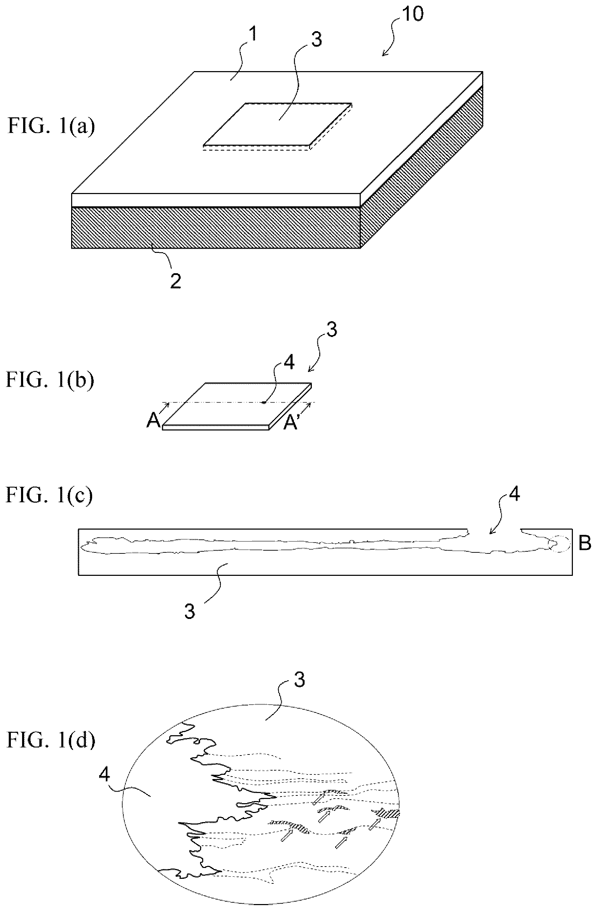

FIG. 1(a) is a schematic view showing the position where a corrosion test piece of a cladding material is taken out from clad steel. FIG. 1(b) is a schematic view showing the state of the test piece after a corrosion test. FIG. 1(c) is an enlarged schematic cross-sectional view of the test piece including the pitting corrosion position viewed along the line A-A' of FIG. 1(b). FIG. 1(d) is an enlarged microstructure of the cross-section of part B after etching. Description of Embodiment

The inventors of the present invention have studied the relation between the chemical composition, center segregation, and corrosion resistance of the cladding material. FIGS. 1(a) to 1(d) show an example of the corrosion test, where a test piece 3 was cut out from a cladding material 1 of clad steel 10 (FIG. 1(a)) and subjected to the corrosion test (FIG. 1(b)), and the cross-section viewed along the line A-A' including the position where pitting corrosion 4 had occurred (FIG. 1 (c)) was observed. Progress of corrosion was observed over a wide area from the pitting part 4 through the center segregation part. The part B close to the corroded part of FIG. 1(c) was etched and subjected to microstructural observation. The result shows that sigma phases, which are shown by arrows, precipitate in the center segregation part (FIG. 1(d)). In other words, the inventors have found that precipitates of intermetallic compounds such as sigma phase and chi phase, carbides, and nitrides cause deterioration in corrosion resistance at the center position of the plate thickness of a cladding material of duplex stainless steel. Further, they have revealed that the amounts of segregations of Si and Mo at the center position of the plate thickness of the cladding material correlate with the formations of intermetallic compounds and precipitates and the corrosion resistance, and thus found that clad steel with excellent corrosion resistance even to the center part of the plate thickness of cladding material can be provided by specifying the segregation amounts of Si and Mo at the center position of the plate thickness of the cladding material, leading to the present invention.

An embodiment of the invention will now be explained. First, clad steel has a configuration in which a cladding material is bonded to either or both sides of a base metal. The base metal includes, for example, but should not be limited to, low-alloy steel or carbon steel for shipbuilding, pressure vessels, general welded bodies, and pipelines, and the base metal may include a variety of steel materials depending on the application.

The chemical composition of the cladding material and the elemental concentrating degree at the center part of the plate thickness will now be specifically described.

First, the reason for specifying the chemical composition of the cladding material of the present invention will be explained. Note that the units used in the chemical compositions are all "mass%" but hereinafter, unless otherwise specified, they are simply indicated as "%".

(a) C: not more than 0.030%

C is one of the elements that is unavoidably present in steel material. When the C content exceeds 0.030%, precipitation of carbides become significant, causing deterioration in corrosion resistance. Therefore, the C content should be not more than 0.030%. The preferable lower limit is 0.001% since an excessive refining load is required to reduce the C content to less than 0.001%. The preferable upper limit is 0.025%.

(b) Si: not more than 1.00%

Si is a useful element for deoxidization. However, when concentrating in the center segregation part and contained by exceeding 1.00%, Si significantly promotes the precipitation of harmful precipitates (intermetallic compounds such as sigma phase and chi phase), adversely affecting the corrosion resistance in the center part of the plate thickness. Therefore, the Si content should be not more than 1.00%. The preferable lower limit is 0.15%, and the preferable upper limit is 0.60%.

(c) Mn: not more than 2.00%

Mn is also a useful element for deoxidization. However, a Mn content exceeding 2.00% will cause the formation of MnS, deteriorating corrosion resistance, in particular, pitting corrosion resistance. Therefore, the Mn content should be not more than 2.00%. The preferable lower limit is 0.30%, and the preferable upper limit is 1.50%.

(d) P: not more than 0.040%

The P content exceeding 0.040% will cause deterioration of toughness. Therefore, the P content should be not more than 0.040%. The preferable lower limit is 0.001% because an excessive refining load and expensive raw material with a low P content are required to reduce the P content to less than 0.001%. The preferable upper limit is 0.035%.

(e) S: not more than 0.0050%

If the S content exceeds 0.0050%, not only does hot workability deteriorate but also corrosion resistance, especially pitting corrosion resistance deteriorates. Therefore, the S content should be not more than 0.0050%. The preferable lower limit of the S content is 0.0001% because excessive refining load and expensive raw materials with low S content are required to reduce the S content to less than 0.0001%. The preferable upper limit is 0.0020%.

(f) Ni: 4.50 to 6.50%

Ni is an essential element for stabilizing the gamma phase, which is one phase of the duplex stainless steel. Ni is required to be contained by not less than 4.50% to show this effect. However, since Ni is an expensive metal, a high Ni content causes the alloy itself to be more expensive than conventional alloys. Therefore, the Ni content should be in the range of 4.50 to 6.50%. Moreover, the duplex stainless steel has the most excellent corrosion resistance when the ratio of the gamma phase to the alpha phase is approximately 1:1. To satisfy this phase ratio, the Ni content should be in the range of 4.50 to 6.50%. The preferable lower limit is 5.00%, and the preferable upper limit is 6.00%.

(g) Cr: 21.00 to 24.00%.

Cr is an essential element to guarantee the corrosion resistance of alloy and to stabilize the alpha phase, the phase other than the gamma phase in the duplex stainless steel. Cr needs to be contained by not less than 21.00% to show the effect. However, a Cr content exceeding 24.00% will significantly promote the precipitation of the sigma phase, which adversely affects ductility and toughness. Therefore, the Cr content should be in the range of 21.00% to 24.00 % range. Moreover, as described above, the duplex stainless steel has the most excellent corrosion resistance when the ratio of the gamma phase to the alpha phase is approximately 1:1, and to satisfy this phase ratio, the Cr content should be in the range of 21.00 to 24.00%. The preferable lower limit is 22.0%, and the preferable upper limit is 23.0%.

(h) Mo: 2.50 to 3.50%

Mo concentrates in the center segregation part, and a Mo content exceeding 3.50% will significantly promote the precipitation of harmful precipitates, which adversely affects corrosion resistance at the center part of the plate thickness. On the other hand, as being an important element that improves the alloy's corrosion resistance, especially pitting corrosion resistance and crevice corrosion resistance, Mo is required to be contained by not less than 2.50% to achieve the effect. Therefore, the Mo content should be in the range of 2.50 to 3.50%. Moreover, as described above, the duplex stainless steel has the most excellent corrosion resistance when the ratio of the gamma phase to the alpha phase is approximately 1:1, and to satisfy this phase ratio, the Mo content should be in the range of 2.50 to 3.50%. The preferable lower limit is 3.00%.

(i) N: 0.08 to 0.20%

N is an important element that improves corrosion resistance, especially pitting corrosion resistance of alloy, and also is an effective element that improves strength. To show this effect, N is required to be contained by not less than 0.08%. However, the N content exceeding 0.20% will have a significant adverse effect on the welding properties of alloy. Therefore, the N content should be in the range of 0.08 to 0.20%. Moreover, as described above, the duplex stainless steel has the most excellent corrosion resistance when the ratio of the gamma phase to the alpha phase is approximately 1:1, and to satisfy this phase ratio, the N content should be in the range of 0.08 to 0.20%. The preferable lower limit is 0.12%.

(j) O: not more than 0.0100%

O is one of the elements unavoidably present in steel material. The O content exceeding 0.0100% causes significant precipitation of oxide, deteriorating corrosion resistance and toughness. Therefore, the O content should be not more than 0.0100%. The preferable lower limit of the O content is 0.0010% because an excessive refining load or excessive deoxidizer is required to reduce the O content to less than 0.0010%. The preferable upper limit is 0.0050%.

Note that elemental symbols in Formulae (1) to (3) below represent the mass% of each element.

The chemical composition is adjusted such that a PI value, which is an index value for pitting corrosion resistance and defined by Formula (1), satisfies 32.0 to 36.0.

$$PI = Cr + 3.3Mo + 16N \ldots (1)$$

When the PI value is not less than 32.0, sufficient pitting corrosion resistance on the surface of the cladding material can be obtained. On the other hand, when the PI value exceeds 36.0, the elements tend to concentrate at the center position of the plate thickness. Thus, the PI value should be in the range of 32.0 to 36.0. The preferable lower limit is 34.0.

There will be explained the reason for limiting the degree of element concentration at the center part of the plate thickness of the cladding material.

The Si content and Mo content in the direction of the plate thickness of the raw material of the cladding material of the clad steel are such that an X value expressed by Formula (2) below satisfies not less than 30 in a range of not more than 10% of the total thickness. Note that the raw material of the cladding material can use any of a continuous casting cast slab, a slab after ingot-making and slabbing but before hot rolling of the slab, and a slab of the size of a sheet bar from thin-slab continuous caster.

$$X = 60\delta Si + 40\delta Mo \quad \cdot \cdot \cdot \quad ( 2)$$

, with

$$\delta Si = Si \text{ (at the analyzed position)} - Si \text{ (at the 0.25t position)},$$

$$\delta Mo = Mo \text{ (at the analyzed position)} - Mo \text{ (at the 0.25t position)},$$

and

t representing the plate thickness and 0.25t position representing the 1/4 position of the plate thickness of the cladding material from the surface in the thickness direction.

When the plate thickness range where the X value satisfies not less than 30 is not more than 10% of the total thickness, the elements Si and Mo do not significantly concentrate at the center position of the plate thickness, and the cladding material of the clad steel can obtain good corrosion resistance even at the center position of the plate thickness. On the other hand, when the plate thickness range where the X value satisfies not less than 30 exceeds 10% of the total thickness, precipitates are formed at the center position of the plate thickness of the cladding material and corrosion resistance is impaired. Therefore, the plate thickness range where the X value satisfies not less than 30 should be not more than 10%, preferably not more than 6% of the total thickness. It is more preferable that the plate thickness range where the X value satisfies not less than 30 is none.

In order to obtain a cladding material that meets the above X value, it is desirable to apply appropriate casting techniques, such as a soft reduction or continuous forging press method during continuous casting. The casting method should not be limited to those described above, of course.

The Si and Mo contents at the center part of the plate thickness of the cladding material of the clad steel are adjusted such that an Xc value, an index value of the center segregation of the steel expressed by Formula (3) below, is not more than 50.

$$Xc = 60 \Delta Si + 40 \Delta Mo \ldots (3),$$

where

$$\Delta Si = Si \text{ (at the 0.5t position)} - Si \text{ (at the 0.25t position)},$$

$$\Delta \text{Mo} = \text{Mo (at the 0.5t position)} - \text{Mo (at the 0.25t position),}$$

with

t representing the plate thickness, 0.5t position representing the center position of the plate thickness of the cladding material, and 0.25t position representing 1/4 position of the plate thickness of the cladding material from the surface in the thickness direction.

When the Xc value is not more than 50, the elements Si and Mo do not significantly concentrate at the center position of the plate thickness of the cladding material is not significant, and the cladding material can obtain good corrosion resistance even at the center position of the plate thickness. On the other hand, when the Xc value exceeds 50, precipitates are formed at the center position of the plate thickness of the cladding material, impairing the corrosion resistance. Thus, the Xc value should be not more than 50, preferably not more than 40. The lower limit is not particularly limited, but the Xc value is preferably not less than 0 because the chemical compositions may fall below each lower limit when negative segregation is caused.

The Si and Mo contents at each position of the plate thickness can be analyzed, for example, by electron probe microanalyzer, spark discharge emission spectrometry, and inductively coupled plasma emission spectrometry. The analysis method should not be limited as described above, of course.

The description has been made on the basic chemical compositions, and the following elements can be included as needed. That is, as optional elements, the raw material of the cladding material may include at least one element group selected from

Group A: at least one selected from Cu: 0.01 to 1.50%, W: 0.01 to 2.00%, Co: 0.01 to 1.50%, and V: 0.01 to 0.80%;
Group B: at least one selected from Ti: 0.01 to 0.10% and Nb: 0.01 to 0.20%;
Group C: at least one selected from Sn: 0.01 to 0.20% and Sb: 0.01 to 0.20%;
Group D: at least one selected from Zr: 0.01 to 0. 20%, Mg: 0.0005 to 0.0100%, Ca: 0.0005 to 0.0100%, REM: 0.01 to 0.20% and B: 0.0005 to 0.0200%; and
Group E: A1: 0.003 to 0.080%.
Group A: at least one selected from Cu: 0.01 to 1.50%, W: 0.01 to 2.00%, Co 0.01 to 1.50% and V: 0.01 to 0.80%

Cu: 0.01 to 1.50%.

Cu is an element that improves corrosion resistance, and the effect is provided at a content of not less than 0.01%. However, the Cu content exceeding 1.50% causes significant deterioration in hot workability. Therefore, when Cu is contained, the Cu content is preferably in the range of 0.01% to 1.50%. The more preferable upper limit is 1.00%.

W: 0.01 to 2.00%.

W is an element that improves the corrosion resistance, especially the pitting corrosion resistance of alloy, and the effect is provided at a content of not less than 0.01%. However, the content exceeding 1.50% promotes the precipitation of the sigma phase. Therefore, when W is contained, the W content is preferably in the range of 0.01 to 2.00%. The more preferable upper limit is 1.50%

Co: 0.01 to 1.50%

Co is an element that improves corrosion resistance, and the effect is provided at a content of not less than 0.01%. However, the alloy price increases with the Co content exceeding 1.50%. Therefore, when Co is contained, the Co content is preferably in the range of 0.01% to 1.50%. The more preferable upper limit is 1.00%.

V: 0.01 to 0.80%

V is an element useful for improving the corrosion resistance of steel, the effect of which is provided at the addition of not less than 0.01%. When V is excessively added by exceeding 0.80%, the toughness thereof is deteriorated. Therefore, when V is added, the V content is preferably in the range of 0.01 to 0.80%. The more preferable upper limit is 0.50%.

Group B: at least one selected from Ti: 0.01 to 0.10% and Nb: 0.01 to 0.20%

Ti: 0.01 to 0.10%

Ti easily combines with C. When being contained in alloy, Ti can delay the precipitation of carbides such as $Cr_{23}C_6$, which is harmful to corrosion resistance. The effect is provided at a content of not less than 0.01%. The Ti content exceeding 0.10% does not improve the effect, only increasing the alloy cost. Therefore, when Ti is contained, the Ti content is preferably in the range of 0.01% to 0.10%. The more preferable upper limit is 0.05%.

Nb: 0.01 to 0.20%

Nb also easily combines with C, like Ti. When being contained in alloy, Nb can delay the precipitation of carbides such as $Cr_{23}C_6$, which is harmful to corrosion resistance. The effect is provided at a content of not less than 0.01%. The Nb content exceeding 0.20% does not improve the effect, only increasing the alloy cost. Therefore, when Nb is contained, the content is preferably in the range of 0.01% to 0.20%. The more preferable upper limit is 0.10%.

Group C: at least one selected from Sn: 0.01 to 0.20% and Sb: 0.01 to 0.20%

Sn: 0.01 to 0.20%

Sn is a useful element for improving the corrosion resistance of steel, the effect of which is provided at a content of not less than 0.01%. The Sn content exceeding 0.20% deteriorates hot workability. Therefore, when Sn is added, the Sn content is preferably in the range of 0.01% to 0.20%. The more preferable upper limit is 0.15%.

Sb: 0.01 to 0.20%

Sb is an element useful for improving the corrosion resistance of steel, the effect of which is provided at a content of not less than 0.01%. The Sb content exceeding 0.20% deteriorates hot workability. Therefore, when Sb is added, the Sb content is preferably in the range of 0.01% to 0.20%. The more preferable upper limit is 0.15%.

Group D: at least one selected from Zr: 0.01 to 0.20%, Mg: 0.0005 to 0.0100%, Ca: 0.0005 to 0.0100%, REM: 0.01 to 0.20% and B: 0.0005 to 0.0200

Zr: 0.01 to 0.20%

Zr is an element useful for improving hot workability of steel, the effect of which is provided at a content of not less than 0.01%. The Zr content exceeding 0.20% inversely deteriorates hot workability. Therefore, when Zr is added, the Zr content is preferably in the range of 0.01% to 0.20%. The more preferable upper limit is 0.15%.

Mg: 0.0005 to 0.0100%

Mg is an element useful for refining the solidification structure of steel and improving hot workability, the effect of which is provided at a content of not less than 0.0005%. The Mg content exceeding 0.0100% deteriorates corrosion resistance. Therefore, when Mg is added, the Mg content is preferably in the range of 0.0005 to 0.0100%. The more preferable upper limit is 0.0050%.

Ca: 0.0005 to 0.0100%

Ca is an element useful for fixing O and S in steel as inclusions to improve hot workability and corrosion resistance. The effect is provided at a Ca content of not less than 0.0005%. Moreover, Ca content exceeding 0.0100% deteriorates toughness. When Ca is added, therefore, the Ca content is preferably in the range of 0.0005 to 0.0100% is preferred. The more preferable upper limit is 0.0050%.

REM: 0.01 to 0.20%.

REM (rare earth metals) are useful for improving the hot workability of steel, the effect of which is provided at an addition of not less than 0.01%. The excessive REM content of more than 0.20% inversely deteriorates hot workability. Therefore, when REM is added, the REM content is preferably in the range of 0.01 to 0.20%. The more preferable upper limit is 0.10%.

B: 0.0005 to 0.0200%.

B is an element useful for improving the hot workability of steel, the effect of which is provided at the content of not less than 0.0005%. The excessive B content of more than 0.0200% inversely deteriorates hot workability. Therefore, when B is added, the B content is preferably in the range of 0.0005 to 0.0200%. The more preferable lower limit is 0.0010%, and the more preferable upper limit is 0.0100%.

Group E: A1: 0.003 to 0.080%

A1: 0.003 to 0.080%

A1 is an element useful for deoxidization, the effect of which is provided at a content of not less than 0.003%. The Al content of more than 0.080% forms oxide clusters to deteriorate toughness. Therefore, when Al is added, the Al content is preferably in the range of 0.003% to 0.080%. The remaining compositions other than above are Fe and inevitable impurities.

As described above, it has been clear that duplex stainless steel, being cladding material, exhibits maximum corrosion resistance when the phase fraction of the alpha phase to the gamma phase is approximately 1:1. Therefore, it is preferable that the phase fractions of the alpha phase and gamma phase be each in the range of 30 to 70% for the phase fractions capable of providing sufficient corrosion resistance. A more preferable lower limit is 40%, and a more preferable upper limit is 60%.

In order to obtain high corrosion resistance, the sum of phase fractions of the precipitates (i.e., the sigma phase and carbides), which deteriorate corrosion resistance, is preferably not more than 1.0%, and more preferably, not more than 0.5%. Note that the total of the phase fractions of alpha phase + gamma phase + sigma phase + carbides sums to 100%. When the sum of the phase fractions of the sigma phase and carbides is zero, the total phase fraction of the alpha phase + gamma phase sums to 100%.

An embodiment of a method for manufacturing clad steel of the present invention will now be described. The cladding material of the clad steel is prepared to have the chemical composition described above and obtained by appropriate casting techniques such as soft reduction or continuous forging press method, and then hot-rolled to form a rolled body with the desired plate thickness. The base metal is selected appropriately according to the use environment or other factors. For example, the base metal can use a steel body (slab) of low-alloy steel or carbon steel, which are manufactured by a conventional method for use in shipbuilding, pressure vessels, general welded bodies, and pipelines, and the steel body (slab) is formed into a base metal material with the desired plate thickness by hot rolling as necessary. By using the base metal material and the rolled body of the cladding material, an assembled slab for clad rolling (hereinafter referred to as "assembled slab") is produced.

The assembled slab can be formed by using known methods, among which an assembly configuration of overlapping base metal/cladding material/cladding material/base metal in order is efficient in terms of manufacturing. In consideration of warping during cooling, it is desirable that each base metal and each cladding material should have the same respective thicknesses. In the above assembling configuration, it is desirable to apply a separating agent such as alumina or MgO between the opposing cladding materials. Needless to say, the assembly method should not be limited to that described above.

The thus-formed assembled slab is heated and subjected to hot rolling. That is, (I) a hot rolling process for the raw material for the cladding material, (II) a heating process for the assembled slab, and (III) a hot rolling process for the assembled slab are performed in this order. The conditions for each process are as follows.

(I) Rolling reduction ratio of cladding material rolled body: more than 5.0

The rolling reduction ratio of the cladding material rolled body should be more than 5.0 to reduce the region of the center segregation of the cladding material. When the rolling reduction ratio of the cladding material rolled body exceeds 5.0, the center segregation can be made harmless by subsequent heating and hot rolling of the assembled slab. Therefore, the rolling reduction ratio of the cladding material is preferably more than 5.0, and more preferably not less than 6.0. Note that, hereinafter, the rolling reduction ratio is a value obtained by dividing the plate thickness before the rolling by that after the rolling. Although the upper limit of the rolling reduction ratio is not particularly limited, the upper limit is preferably 40.0 in consideration of the rolling efficiency.

(II) Heating conditions for assembled slab: for not less than 60 minutes in the temperature region of not lower than 1100°C

The assembled slab is heated for not less than 60 minutes in the temperature region of not lower than 1100°C for the purpose of a solution treatment of the cladding material. Note that the heating is conducted such that the position of 0.5t (the center position of the plate thickness) of the cladding material satisfies the temperature conditions of heating for not less than 60 minutes in the temperature region of not lower than 1100°C, and the temperature can be calculated by differential heat transfer calculations or the finite element method. When applying the heating conditions of heating the assembled slab for not less than 60 minutes in the temperature region of not lower than 1100°C, Si and Mo, which concentrate in the center segregation part in the cladding material, are sufficiently diffused, and the subsequent hot rolling allows the center segregation to be harmless. Therefore, the heating conditions of the assembled slab are preferably for not less than 60 minutes in the temperature region of not lower than 1100°C, and more preferably for not less than 60 minutes in the temperature region of not lower than 1150°C. If the slab is held in a high-temperature region for a long time, the crystal grains of the base metal are coarsened to bring about deterioration of toughness. Therefore, the upper limit of the heating time for the assembled slab is preferably 300 minutes. Moreover, the upper limit of the heating temperature of the assembled slab is preferably 1300°C to prevent the crystal grains of the base metal from being coarsened to thus deteriorate the toughness.

(III) Rolling reduction ratio of assembled slab: not less than 3.0

The rolling reduction ratio of the assembled slab should be not less than 3.0 in order to reduce the region of center segregation in the cladding material and to make it harmless. When the rolling reduction ratio of the assembled slab is not less than 3.0, the region of the center segregation becomes small enough to obtain excellent corrosion resistance even in the center part of the thickness of the cladding material. Therefore, the rolling reduction ratio of the assembled slab is preferably not less than 3.0, and more preferably not less than 4.0. The upper limit of the rolling reduction ratio is not particularly limited, but in consideration of rolling efficiency, the upper limit is preferably 40.0.
By the method for manufacturing duplex stainless clad steel described above, clad steel material with excellent corrosion resistance even in the center part of the plate thickness of the cladding material can be manufactured. The method for manufacturing clad steel has only to include the above processes, and other known processes may be added if necessary.

Example

Next, there will be described examples of the invention. Note that the invention should not be limited to these examples only.
The steel types shown in Tables 1-1 and 1-2 were melted to each form a raw material to be cladding material having a thickness of 135 mm. A raw material to be base metal was formed by melting material of a composition conforming to KD36 specified in Rules for Steel Ships, volume-K, Material, issued by Nippon Kaiji Kyokai. In Tables 1-1 and 1-2, underlined values indicate to be outside the scope of the present invention, while a blank indicates the corresponding element is not contained or is contained as an inevitable impurity. Tables 1-1 and 1-2 also show PI values calculated by using the above equation (1).

Table 1-1

| Steel No. | Chemical composition (mass%) | | | | | | | | | | | | | PI | Remarks |
|---|---|---|---|---|---|---|---|---|---|---|---|---|---|---|---|
| | C | Si | Mn | P | S | Ni | Cr | Mo | N | O | Other elements | | | | |
| S01 | 0.018 | 0.58 | 0.59 | 0.003 | 0.0009 | 5.59 | 22.23 | 3.21 | 0.18 | 0.0044 | | 35.7 | Inventive steel |
| S02 | 0.009 | 0.31 | 1.18 | 0.010 | 0.0007 | 5.75 | 22.25 | 3.11 | 0.19 | 0.0015 | | 35.6 | Inventive steel |
| S03 | 0.024 | 0.18 | 1.31 | 0.015 | 0.0003 | 5.29 | 22.51 | 3.09 | 0.17 | 0.0031 | | 35.4 | Inventive steel |
| S04 | 0.030 | 0.55 | 0.57 | 0.006 | 0.0007 | 5.02 | 21.95 | 3.32 | 0.19 | 0.0022 | | 35.9 | Inventive steel |
| S05 | 0.001 | 0.53 | 0.85 | 0.035 | 0.0019 | 5.77 | 22.33 | 3.07 | 0.19 | 0.0035 | | 35.5 | Inventive steel |
| S06 | 0.024 | 0.99 | 1.15 | 0.018 | 0.0003 | 5.10 | 22.36 | 3.08 | 0.18 | 0.0042 | | 35.4 | Inventive steel |
| S07 | 0.025 | 0.01 | 1.06 | 0.001 | 0.0016 | 5.93 | 22.49 | 3.17 | 0.19 | 0.0032 | | 36.0 | Inventive steel |
| S08 | 0.018 | 0.51 | 1.97 | 0.032 | 0.0017 | 5.25 | 22.40 | 3.36 | 0.15 | 0.0015 | | 35.9 | Inventive steel |
| S09 | 0.023 | 0.16 | 0.01 | 0.029 | 0.0018 | 5.05 | 22.31 | 3.44 | 0.12 | 0.0026 | | 35.6 | Inventive steel |
| S10 | 0.018 | 0.49 | 1.16 | 0.040 | 0.0007 | 5.01 | 22.22 | 3.15 | 0.20 | 0.0017 | | 35.8 | Inventive steel |
| S11 | 0.009 | 0.53 | 1.23 | 0.021 | 0.0050 | 5.02 | 22.08 | 3.20 | 0.18 | 0.0023 | | 35.5 | Inventive steel |
| S12 | 0.012 | 0.34 | 1.04 | 0.033 | 0.0005 | 6.47 | 22.42 | 3.29 | 0.17 | 0.0029 | | 36.0 | Inventive steel |
| S13 | 0.018 | 0.28 | 0.44 | 0.016 | 0.0002 | 4.52 | 22.05 | 3.35 | 0.17 | 0.0025 | | 35.8 | Inventive steel |
| S14 | 0.021 | 0.47 | 0.61 | 0.032 | 0.0006 | 5.35 | 23.98 | 2.87 | 0.14 | 0.0031 | | 35.7 | Inventive steel |
| S15 | 0.011 | 0.33 | 0.47 | 0.017 | 0.0003 | 5.24 | 21.03 | 3.12 | 0.16 | 0.0010 | | 33.9 | Inventive steel |
| S16 | 0.010 | 0.17 | 1.24 | 0.025 | 0.0015 | 5.86 | 21.57 | 3.50 | 0.14 | 0.0042 | | 35.4 | Inventive steel |
| S17 | 0.010 | 0.15 | 1.01 | 0.019 | 0.0014 | 5.38 | 22.42 | 2.50 | 0.16 | 0.0036 | | 33.2 | Inventive steel |
| S18 | 0.011 | 0.42 | 0.94 | 0.008 | 0.0020 | 5.93 | 22.49 | 3.07 | 0.20 | 0.0036 | | 35.8 | Inventive steel |
| S19 | 0.019 | 0.44 | 1.22 | 0.002 | 0.0004 | 5.68 | 22.07 | 3.07 | 0.08 | 0.0013 | | 33.5 | Inventive steel |
| S20 | 0.023 | 0.37 | 0.37 | 0.018 | 0.0007 | 5.33 | 22.24 | 3.21 | 0.17 | 0.0099 | | 35.6 | Inventive steel |
| S21 | 0.018 | 0.20 | 0.81 | 0.013 | 0.0008 | 5.49 | 22.28 | 3.19 | 0.19 | 0.0003 | | 35.8 | Inventive steel |

Table 1-2

| Steel No. | Chemical composition (mass%) | | | | | | | | | | | PI | Remarks |
|---|---|---|---|---|---|---|---|---|---|---|---|---|---|
| | C | Si | Mn | P | S | Ni | Cr | Mo | N | O | Other elements | | |
| S22 | 0.015 | 0.32 | 0.90 | 0.020 | 0.0002 | 5.18 | 22.42 | 3.33 | 0.16 | 0.0021 | | 36.0 | Inventive steel |
| S23 | 0.010 | 0.59 | 1.49 | 0.034 | 0.0009 | 5.55 | 21.52 | 2.60 | 0.12 | 0.0010 | | 32.0 | Inventive steel |
| S24 | 0.017 | 0.49 | 0.37 | 0.017 | 0.0008 | 5.52 | 22.44 | 3.21 | 0.15 | 0.0024 | Cu: 0.03, Co: 0.05 | 35.4 | Inventive steel |
| S25 | 0.007 | 0.25 | 0.49 | 0.010 | 0.0011 | 5.22 | 22.78 | 3.29 | 0.14 | 0.0044 | W: 0.04, Ti: 0.02, Nb: 0.01, V: 0.03 | 35.9 | Inventive steel |
| S26 | 0.023 | 0.47 | 1.17 | 0.004 | 0.0002 | 5.75 | 22.12 | 3.24 | 0.19 | 0.0031 | Sn: 0.01, Sb: 0.01 | 35.9 | Inventive steel |
| S27 | 0.015 | 0.40 | 0.54 | 0.019 | 0.0014 | 5.48 | 22.15 | 3.26 | 0.13 | 0.0016 | Zr: 0.01, REM: 0.02 | 35.0 | Inventive steel |
| S28 | 0.014 | 0.57 | 1.12 | 0.021 | 0.0010 | 5.84 | 22.00 | 3.35 | 0.18 | 0.0045 | Mg:0.0005, Ca:0.0006 | 35.9 | Inventive steel |
| S29 | 0.021 | 0.46 | 0.70 | 0.026 | 0.0018 | 5.98 | 22.66 | 3.36 | 0.13 | 0.0021 | A1: 0.003 | 35.8 | Inventive steel |
| S30 | 0.020 | 0.60 | 1.33 | 0.001 | 0.0009 | 5.45 | 22.54 | 3.14 | 0.17 | 0.0016 | B: 0.0005 | 35.6 | Inventive steel |
| S31 | 0.031 | 0.50 | 0.98 | 0.021 | 0.0009 | 5.18 | 22.43 | 3.11 | 0.15 | 0.0042 | | 35.1 | Comparative steel |
| S32 | 0.023 | 1.02 | 0.36 | 0.031 | 0.0010 | 5.79 | 22.99 | 3.13 | 0.13 | 0.0020 | | 35.4 | Comparative steel |
| S33 | 0.008 | 0.58 | 2.03 | 0.031 | 0.0005 | 5.41 | 22.00 | 3.17 | 0.14 | 0.0027 | | 34.7 | Comparative steel |
| S34 | 0.011 | 0.42 | 1.33 | 0.016 | 0.0052 | 5.05 | 22.27 | 3.33 | 0.17 | 0.0031 | | 36.0 | Comparative steel |
| S35 | 0.005 | 0.28 | 0.36 | 0.025 | 0.0009 | 5.83 | 24.03 | 2.97 | 0.12 | 0.0027 | | 35.8 | Comparative steel |
| S36 | 0.023 | 0.35 | 0.61 | 0.021 | 0.0013 | 5.57 | 22.21 | 3.52 | 0.12 | 0.0022 | | 35.7 | Comparative steel |
| S37 | 0.013 | 0.31 | 0.99 | 0.008 | 0.0016 | 5.71 | 22.55 | 2.49 | 0.17 | 0.0015 | | 33.5 | Comparative steel |
| S38 | 0.014 | 0.29 | 1.06 | 0.005 | 0.0017 | 5.28 | 21.95 | 3.21 | 0.21 | 0.0017 | | 35.9 | Comparative steel |
| S39 | 0.010 | 0.24 | 1.12 | 0.030 | 0.0003 | 5.65 | 21.05 | 3.04 | 0.07 | 0.0035 | | 32.2 | Comparative steel |
| S40 | 0.017 | 0.21 | 0.49 | 0.028 | 0.0018 | 5.81 | 21.67 | 3.37 | 0.17 | 0.0103 | | 35.5 | Comparative steel |
| S41 | 0.015 | 0.15 | 1.28 | 0.031 | 0.0009 | 5.68 | 22.60 | 3.24 | 0.18 | 0.0042 | | 36.2 | Comparative steel |
| S42 | 0.017 | 0.32 | 1.10 | 0.025 | 0.0010 | 5.34 | 21.20 | 2.67 | 0.10 | 0.0023 | | 31.6 | Comparative steel |

The raw material to be cladding material was heated to 1200°C and hot-rolled under the conditions of the rolling reduction ratio shown in Table 2 to form an intermediate material (rolled body) of cladding material. The raw material to be base metal was hot-rolled in advance as necessary to form an intermediate material of base metal. The intermediate materials of cladding material and base metal were then assembled to manufacture an assembled slab, which was then rolled under the rolling conditions of a product shown in Table 2 to manufacture clad steel with a cladding material thickness of 3 mm and a base metal thickness of 12 mm. The hot rolling process of the assembled slab was carried out under the conditions as follows: with respect to the 0.5t position of the cladding material (at the center position of the plate thickness), the rolling finish temperature was 1000°C, the cooling start temperature was 970°C, the average cooling rate was 5 to 10°C/s, and the cooling stop temperature was 500 to 700°C.

Table 2

| Condition No. | Manufacturing conditions | | | | | Remarks |
|---|---|---|---|---|---|---|
| | Rolling conditions for raw material of cladding material | Rolling conditions of product | | | | |
| | Rolling reduction ratio [-] | Heating temperature [°C] | Holding time at not lower than 1100°C [min] | Holding time at not lower than 1150°C [min] | Rolling reduction ratio [-] | |
| C01 | 9.2 | 1200 | 90 | 30 | 4.9 | Inventive condition |
| C02 | 8.5 | 1200 | 90 | 30 | 5.3 | Inventive condition |
| C03 | 7.9 | 1200 | 90 | 30 | 5.7 | Inventive condition |
| C04 | 5.1 | 1200 | 90 | 30 | 8.8 | Inventive condition |
| C05 | 9.0 | 1250 | 240 | 180 | 5.0 | Inventive condition |
| C06 | 7.0 | 1150 | 60 | 5 | 6.4 | Inventive condition |
| C07 | 15.0 | 1200 | 90 | 30 | 3.0 | Inventive condition |
| C08 | <u>4.8</u> | 1160 | 75 | 5 | 9.4 | Comparative condition |
| C09 | 8.0 | 1120 | 55 | 0 | 5.6 | Comparative condition |
| C10 | 15.5 | 1160 | 75 | 5 | <u>2.9</u> | Comparative condition |

A test piece was taken out from the thus-obtained clad steel to conduct a corrosion resistance test for the cladding material.
The Si and Mo contents of the raw material of the cladding material in the direction of the plate thickness were measured according to the following procedure. First, two types of test pieces with a thickness t: 50 × w:10 × L: 20 mm, one of which includes the center position (0.5 t) and the other of which includes a 1/4 position (0.25 t) of the plate thickness, were taken out from the raw material of the cladding material before hot rolling, and each surface of t: 50 × L: 20 mm was polished with an alumina buffing finishing. Then, the surface of t:50 × L: 20 mm was subjected to a linear analysis in the plate thickness direction by using an electron probe microanalyzer under conditions of an acceleration voltage of 15 kV, an irradiation current of 0.2 μA, a beam diameter of 0.1 mm, and a measurement interval of 0.1 mm. The obtained measurement values were compared to those of the standard test piece to determine the Si content and Mo content, from which the X value was calculated by above Formula (2).
The contents of Si and Mo at the positions of 0.25t and 0.5t of the cladding material of the clad steel after hot rolling were measured according to the following procedure. First, a test piece of t: 5 × W: 20 × L: 20 mm is taken out and the test piece was polished so as to have a measurement surface at positions of 0.25t and 0.5t of the cladding material parallel to the surface of the cladding material. The measurement surfaces of W: 20 × L: 20 mm were subjected to spark discharge emission spectrophotometry to thereby calculate the Si and Mo contents at the positions of 0.25t and 0.5t of the cladding material, from which were calculated Xc values based on Formula (3) above.

To evaluate the corrosion resistance of a part including the center position of the plate thickness, a test piece of t: 1.0 mm × W: 20 mm × L: 30 mm was taken out from the cladding material of the clad steel such that the center position of the plate thickness was included in a surface to be tested of W: 20 mm × L: 30 mm, and the surface of the test piece was adjusted to No. 600 finish by wet-polishing.

The corrosion resistance of the cladding material was evaluated by JIS G0578 ferric chloride corrosion test method - test method (B), involving: immersing the test piece in 6% $FeCl_3$ + N/20 HCl solution heated to a test temperature (± 1) °C for 72 hours and observing the surface of the test piece after the test with an optical microscope to observe the presence/absence of pitting corrosion. In the observation, the test piece having pitting corrosion with a depth of not less than 25 μm was judged to generate pitting corrosion, and the temperature (CPT: critical pitting temperature) at which the pitting corrosion started to occur was determined, where specimens with a CPT of not lower than 40°C were judged to have good corrosion resistance.

Tables 3-1 to 3-3 show the test results. The levels within the range of the present invention showed good corrosion resistance. On the other hand, the levels that were outside the range of the present invention showed poor corrosion resistance.

Table 3-1

| Test No. | Cladding material steel No. | Manufacturing method condition No. | Plate thickness range [%] satisfying X≥30 | Xc [-] | CPT [°C] | Remarks |
|---|---|---|---|---|---|---|
| P01 | S01 | C01 | 3 | 32 | 45 | Inventive Example |
| P02 | S01 | C02 | 3 | 33 | 50 | Inventive Example |
| P03 | S01 | C03 | 2 | 34 | 50 | Inventive Example |
| P04 | S01 | C04 | 4 | 48 | 40 | Inventive Example |
| P05 | S01 | C05 | 3 | 23 | 50 | Inventive Example |
| P06 | S01 | C06 | 5 | 50 | 40 | Inventive Example |
| P07 | S01 | C07 | 4 | 46 | 40 | Inventive Example |
| P08 | S02 | C01 | 3 | 38 | 45 | Inventive Example |
| P09 | S03 | C01 | 3 | 38 | 45 | Inventive Example |
| P10 | S04 | C01 | 3 | 37 | 50 | Inventive Example |
| P11 | S05 | C01 | 3 | 34 | 50 | Inventive Example |
| P12 | S06 | C01 | 9 | 48 | 40 | Inventive Example |
| P13 | S07 | C01 | 1 | 20 | 50 | Inventive Example |

(continued)

| Test No. | Cladding material steel No. | Manufacturing method condition No. | Plate thickness range [%] satisfying X≥30 | Xc [-] | CPT [°C] | Remarks |
|---|---|---|---|---|---|---|
| P14 | S08 | C01 | 3 | 38 | 45 | Inventive Example |
| P15 | S09 | C01 | 4 | 37 | 45 | Inventive Example |
| P16 | S10 | C01 | 3 | 33 | 50 | Inventive Example |
| P17 | S11 | C01 | 3 | 37 | 50 | Inventive Example |
| P18 | S12 | C01 | 3 | 40 | 45 | Inventive Example |
| P19 | S13 | C01 | 3 | 33 | 45 | Inventive Example |
| P20 | S14 | C01 | 4 | 31 | 45 | Inventive Example |
| P21 | S15 | C01 | 4 | 33 | 40 | Inventive Example |

Table 3-2

| Test No. | Cladding material steel No. | Manufacturing method condition No. | Plate thickness range [%] satisfying X≥30 | Xc [-] | CPT [°C] | Remarks |
|---|---|---|---|---|---|---|
| P22 | S16 | C01 | 10 | 47 | 40 | Inventive Example |
| P23 | S17 | C01 | 0 | 28 | 40 | Inventive Example |
| P24 | S18 | C01 | 4 | 31 | 50 | Inventive Example |
| P25 | S19 | C01 | 4 | 31 | 40 | Inventive Example |
| P26 | S20 | C01 | 5 | 39 | 40 | Inventive Example |
| P27 | S21 | C01 | 2 | 33 | 50 | Inventive Example |
| P28 | S22 | C01 | 3 | 38 | 50 | Inventive Example |
| P29 | S23 | C01 | 4 | 32 | 40 | Inventive Example |
| P30 | S24 | C01 | 4 | 35 | 45 | Inventive Example |
| P31 | S25 | C01 | 4 | 38 | 50 | Inventive Example |

(continued)

| Test No. | Cladding material steel No. | Manufacturing method condition No. | Plate thickness range [%] satisfying X≥30 | Xc [-] | CPT [°C] | Remarks |
|---|---|---|---|---|---|---|
| P32 | S26 | C01 | 4 | 30 | 50 | Inventive Example |
| P33 | S27 | C01 | 4 | 33 | 50 | Inventive Example |
| P34 | S28 | C01 | 3 | 30 | 45 | Inventive Example |
| P35 | S29 | C01 | 4 | 34 | 50 | Inventive Example |
| P36 | S30 | C01 | 3 | 36 | 50 | Inventive Example |
| P37 | S31 | C01 | 3 | 36 | 35 | Comparative Example |
| P38 | S32 | C01 | 5 | 37 | 30 | Comparative Example |
| P39 | S33 | C01 | 5 | 36 | 35 | Comparative Example |
| P40 | S34 | C01 | 5 | 31 | 35 | Comparative Example |
| P41 | S35 | C01 | 3 | 34 | 30 | Comparative Example |
| P42 | S36 | C01 | 2 | 35 | 35 | Comparative Example |

Table 3-3

| Test No. | Cladding material steel No. | Manufacturing method condition No. | Plate thickness range [%] satisfying X≥30 | Xc [-] | CPT [°C] | Remarks |
|---|---|---|---|---|---|---|
| P43 | S37 | C01 | 2 | 33 | 30 | Comparative Example |
| P44 | S38 | C01 | 4 | 38 | 35 | Comparative Example |
| P45 | S39 | C01 | 4 | 33 | 35 | Comparative Example |
| P46 | S40 | C01 | 4 | 38 | 30 | Comparative Example |
| P47 | S41 | C01 | 4 | 33 | 35 | Comparative Example |
| P48 | S42 | C01 | 2 | 39 | 35 | Comparative Example |
| P49 | S36 | C08 | 8 | 53 | 25 | Comparative Example |

(continued)

| Test No. | Cladding material steel No. | Manufacturing method condition No. | Plate thickness range [%] satisfying X≥30 | Xc [-] | CPT [°C] | Remarks |
|---|---|---|---|---|---|---|
| P50 | S36 | C09 | 8 | 63 | 20 | Comparative Example |
| P51 | S36 | C10 | 9 | 68 | 25 | Comparative Example |
| P52 | S01 | C01 | 12 | 42 | 35 | Comparative Example |
| P53 | S36 | C01 | 17 | 50 | 20 | Comparative Example |
| P54 | S36 | C08 | 18 | 88 | 15 | Comparative Example |
| P55 | S36 | C09 | 20 | 94 | 15 | Comparative Example |
| P56 | S36 | C10 | 16 | 86 | 10 | Comparative Example |

Industrial Applicability

The present invention has cladding material being excellent in corrosion resistance up to the center of the plate thickness, and is preferably used for applications requiring high corrosion resistance and material strength, such as cargo tanks of chemical tankers, reaction vessels of chemical plants, and port structures.

Reference Signs List

1   cladding material
2   base metal
3   test piece
4   pitting corrosion
10  clad steel

**Claims**

1.  A duplex stainless clad steel comprising

    a base metal and
    a cladding material of a duplex stainless steel layer formed on at least one side of a base steel plate as the base metal,
    **characterized in that**
    the chemical composition of the cladding material comprises, by mass%, C: not more than 0.030%, Si: not more than 1.00%, Mn: not more than 2.00%, P: not more than 0.040%, S: not more than 0.0050%, Ni: 4.50 to 6.50%, Cr: 21.00 to 24.00%, Mo: 2.50 to 3.50%, N: 0.08 to 0.20%, O: not more than 0.0100%, and the remainder being Fe and inevitable impurities, where a PI value expressed by Formula (1) below is in the range of 32.0 to 36.0 %, an X value expressed by Formula (2) below satisfies not less than 30 in not more than 10% of a total thickness of a raw material of the cladding material, and
    an Xc value expressed by Formula (3) satisfies not more than 50 in the cladding material:

$$PI = Cr + 3.3\,Mo + 16\,N \dots (1)$$

$$X = 60\delta Si + 40\delta Mo \dots (2)$$

$$Xc = 60\Delta Si + 40\Delta Mo \dots (3),$$

where the element symbols indicate the mass% of each element with $\delta Si$ = Si (at an analyzed position) - Si (at a 0.25t position), $\delta Mo$ = Mo (at the analyzed position) - Mo (at the 0.25t position), $\Delta Si$ = Si (at a 0.5t position) - Si (at the 0.25t position), $\Delta Mo$ = Mo (at the 0.5t position) -Mo (at the 0.25t position), and t: the plate thickness of the cladding material.

2. The duplex stainless clad steel according to claim 1, wherein
the chemical composition of the cladding material further contains at least one element group, by mass%, selected from the following groups:

Group A: at least one selected from Cu: 0.01 to 1.50%, W: 0.01 to 2.00%, Co: 0.01 to 1.50%, and V: 0.01 to 0.80%;
Group B: at least one selected from Ti: 0.01 to 0.10% and Nb: 0.01 to 0.20%;
Group C: at least one selected from Sn: 0.01 to 0.20% and Sb: 0.01 to 0.20%;
Group D: at least one selected from Zr: 0.01 to 0. 20%, Mg: 0.0005 to 0.0100%, Ca: 0.0005 to 0.0100%, REM: 0.01 to 0.20% and B: 0.0005 to 0.0200%, and
Group E: A1: 0.003 to 0.080%.

3. A method for manufacturing a duplex stainless clad steel comprising

hot rolling a cladding material having the chemical composition as claimed in claim 1 or 2 as a raw material at a rolling reduction ratio exceeding 5.0 to form a rolled body,
combining a raw material of a base metal and the rolled body of the cladding material,
heating the rolled body part of the cladding material in a temperature region of not lower than 1100°C for not less than 60 minutes, and
hot rolling the resultant at a rolling reduction ratio of not less than 3.0 to form a rolled body of clad steel, where the rolling reduction ratio is a value obtained by dividing the plate thickness before the rolling by that after the rolling.

FIG. 1(a)

FIG. 1(b)

FIG. 1(c)

FIG. 1(d)

## INTERNATIONAL SEARCH REPORT

| International application No. |
| --- |
| PCT/JP2021/003047 |

A. CLASSIFICATION OF SUBJECT MATTER
B23K 20/04(2006.01)i; C21D 9/46(2006.01)i; C22C 38/00(2006.01)i; C22C 38/58(2006.01)i; C22C 38/60(2006.01)i
FI:      C22C38/00 302Z; C21D9/46 Z; C22C38/00 302H; C22C38/58; C22C38/60;
         B23K20/04 A
According to International Patent Classification (IPC) or to both national classification and IPC

B. FIELDS SEARCHED

Minimum documentation searched (classification system followed by classification symbols)
B23K20/04; C21D9/46; C22C38/00; C22C38/58; C22C38/60

Documentation searched other than minimum documentation to the extent that such documents are included in the fields searched
     Published examined utility model applications of Japan       1922–1996
     Published unexamined utility model applications of Japan     1971–2021
     Registered utility model specifications of Japan             1996–2021
     Published registered utility model applications of Japan     1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2018/139513 A1 (JFE STEEL CORPORATION) 02 August 2018 (2018-08-02) | 1-3 |
| A | WO 2019/189708 A1 (JFE STEEL CORPORATION) 03 October 2019 (2019-10-03) | 1-3 |
| A | WO 2019/189871 A1 (NIPPON STEEL STAINLESS STEEL CORPORATION) 03 October 2019 (2019-10-03) | 1-3 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23 March 2021 (23.03.2021) | 30 March 2021 (30.03.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

| INTERNATIONAL SEARCH REPORT | International application No. |
|---|---|
| Information on patent family members | PCT/JP2021/003047 |

| Patent Documents referred in the Report | Publication Date | Patent Family | Publication Date |
|---|---|---|---|
| WO 2018/139513 A1 | 02 Aug. 2018 | JP 2018-119186 A<br>EP 3575427 A1<br>KR 10-2019-0102029 A<br>CN 110225989 A | |
| WO 2019/189708 A1 | 03 Oct. 2019 | (Family: none) | |
| WO 2019/189871 A1 | 30 Oct. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014114466 A
- JP 2018028146 A